(19) Europäisches Patentamt
European Patent Office
Office européen des brevets

(11) Veröffentlichungsnummer: **0 327 847 B1**

(12) # EUROPÄISCHE PATENTSCHRIFT

(45) Veröffentlichungstag der Patentschrift: **12.01.94**

(51) Int. Cl.⁵: **C08L 83/04**, C08K 5/09

(21) Anmeldenummer: **89100835.1**

(22) Anmeldetag: **19.01.89**

(54) **Stabilisieren von unter Abspaltung von Alkoholen zu Elastomeren vernetzaren Organopolysiloxanmassen.**

(30) Priorität: **19.01.88 DE 3801389**

(43) Veröffentlichungstag der Anmeldung:
**16.08.89 Patentblatt 89/33**

(45) Bekanntmachung des Hinweises auf die Patenterteilung:
**12.01.94 Patentblatt 94/02**

(84) Benannte Vertragsstaaten:
**AT BE CH DE ES FR GB IT LI NL SE**

(56) Entgegenhaltungen:
**EP-A- 0 069 256**
**DE-A- 2 443 787**
**FR-B- 1 424 599**
**GB-A- 768 961**
**US-A- 4 680 364**

(73) Patentinhaber: **WACKER-CHEMIE GMBH**
**Hanns-Seidel-Platz 4**
**D-81737 München(DE)**

(72) Erfinder: **Sommer, Oswin, Dr. Dipl.-Chem.**
**Karl-Gros-Strasse 29**
**D-8263 Burghausen(DE)**
Erfinder: **Dorsch, Norman**
**Post Burghausen**
**D-8263 Fuchshausen 148 1/3(DE)**
Erfinder: **Bosch, Erhard, Dr. Dipl.-Chem.**
**Hoher-Göll-Weg 2**
**D-8269 Burgkirchen(DE)**
Erfinder: **Kurz, Alfred**
**Hittorfstrasse 17**
**D-8263 Burghausen(DE)**

EP 0 327 847 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft das Stabilisieren von Organopolysiloxanmassen, die unter Ausschluß von Feuchtigkeit lagerfähig sind, bei Zutritt von Wasser jedoch schon bei Raumtemperatur unter Abspaltung von Alkoholen zu Elastomeren vernetzt werden können.

Aus US 4 424 157 (ausgegeben am 3. Januar 1984, R. H. Chung, General Electric Co.) sind bereits unter Ausschluß von Wasser lagerfähige, bei Zutritt von Wasser bei Raumtemperatur zu Elastomeren vernetzende Massen bekannt, die durch Vermischen von in den endständigen Einheiten je eine Sigebundene Hydroxylgruppe aufweisendem Diorganopolysiloxan mit Silan, an dessen Silicumatom Stickstoff, zwei einwertige Kohlenwasserstoffreste über Sauerstoff und über Kohlenstoff ein einwertiger Kohlenwasserstoffrest gebunden sind, sowie gegebenenfalls mindestens einem weiteren Stoff hergestellt worden sind. EP-A 253 377 (offengelegt am 20. Januar 1988, Erfinder E. Bosch et al., Wacker-Chemie GmbH) beschreibt derartige Massen, die aus in den endständigen Einheiten je eine Si-gebundene Hydroxylgruppe aufweisendem Diorganopolysiloxan und einem Di-Kohlenwasserstoffoxysilan zusammengesetzt sind, wobei die restlichen zwei Valenzen des Siliziumatoms am Silan durch einen zweiwertigen Kohlenwasserstoffaminorest abgesättigt sind und dieser Rest jeweils durch eine Si-C und eine Si-N-Bindung mit dem Siliziumatom verknüpft ist. Aus EP-A 69 256 (offengelegt am 12. Januar 1983, R. A. Smith et al., General Electric Company) und US-A 4,680,364 (ausgegeben am 14. Juli 1987, G. M. Lucas, General Electric Co.) sind unter Abspaltung von Alkoholen vernetzbare Organopolysiloxanmassen bekannt, die als Kondensationskatalysator Zink-2-ethylhexoat enthalten.

Aufgabe der vorliegenden Erfindung war es, Organopolysiloxanmassen bereitzustellen, die ohne Abspaltung von korrosiven, stark basischen oder stark sauren oder übelriechenden Substanzen bei Raumtemperatur zu Elastomeren vernetzt werden können, wobei man diese Massen unter Ausschluß von Feuchtigkeit für lange Zeit ohne wesentliche Änderung ihrer erwünschten Eigenschaften lagern kann. Ferner war es Aufgabe der vorliegenden Erfindung, Organopolysiloxanmassen der vorgenannten Art zu stabilisieren.

Die vorstehend genannten Aufgaben werden durch die vorliegende Erfindung gelöst, durch die Verwendung von Salzen von Metallen der 2. Haupt- und Nebengruppe des Periodensystems mit verzweigtkettigen Carbonsäuren mit 5 bis 15 Kohlenstoffatomen zum Stabilisieren von unter Abspaltung von Alkoholen vernetzbaren Organopolysiloxanmassen, wobei die Salze in Mengen von 1 bis 5 %, bezogen auf das Gesamtgewicht der Organopolysiloxanmasse, zugesetzt werden.

Vorzugsweise enthalten die Organopolysiloxanmassen Organopolysiloxane der Formel

$$(R'O)_m\underset{R'''_q}{\overset{R''_{(3-m-q)}}{Si}} - O - \left[\overset{R_a}{SiO_{\frac{4-a}{2}}}\right]_n - \underset{R'''_q}{\overset{R''_{(3-m-q)}}{Si}}(OR')_m \qquad (I),$$

worin

- R gleiche oder verschiedene einwertige, gegebenenfalls substituierte Kohlenwasserstoffreste mit 1 bis 13 Kohlenstoffatomen;
- R' gleiche oder verschiedene einwertige Kohlenwasserstoffreste mit 1 bis 10 Kohlenstoffatomen, die durch eine $C_1$-bis $C_3$-Alkoxygruppe substituiert sein können;
- R'' gleiche oder verschiedene Si-C-gebundene substituierte Alkylreste mit 1 bis 18 Kohlenstoffatomen, deren Substituenten Amino-, Mercapto-, Acryloxy-, Methacryloxy-, Epoxy-, Allyl- und Cyclohexenylgruppen, Halogenatome und Cyanogruppen sein können;
- R''' gleiche oder verschiedene $C_1$- bis $C_3$-Alkylreste;
- n eine ganze Zahl im Wert von mindestens 50;
- m 1 oder 2; q 0 oder 1, mit der Maßgabe, daß 3-m-q mindestens 1 beträgt;
- a jeweils ganze Zahlen im Wert von 0, 1, 2, oder 3 und einem durchschnittlichen Wert von 1,8 bis 2,2 bedeuten.

Bevorzugt sind als Reste

- R gleiche oder verschiedene einwertige, gegebenenfalls durch Halogenatome oder Cyanogruppen

substituierte Kohlenwasserstoffreste mit 1 bis 8 Kohlenstoffatomen;

R' gleiche oder verschiedene, Alkylreste mit 1 bis 10 Kohlenstoffatomen, insbesondere mit 1 bis 3 Kohlenstoffatomen, die durch Methoxy- oder Ethoxygruppen substituiert sein können;

R'' über $C_2$- bis $C_6$-Alkylenreste mit dem Siliziumatom verbundene Amino-, Mercapto-, Morpholino-, Glycidoxy-, Acryloxy- und Methacryloxygruppen, wobei die genannten Amino- und Mercaptogruppen durch $C_1$- bis $C_6$-Alkyl-, Cycloalkyl-, Aminoalkyl- und Mercaptoalkylgruppen substituiert sein können.

Beispiele für bevorzugte Reste R sind Alkylreste, wie der Methyl-, Ethyl-, n-Propyl-, iso-Propyl-, n-, sec- und t.-Butylrest, Pentylreste, wie der n-, sec-, t.- und neo-Pentylrest, Hexylreste, wie der n-Hexylrest, Heptylreste,wie der n-Heptylrest und Octylreste, wie der n-Octylrest; Alkenylreste, wie der Vinyl- und der Allylrest; Cyclohexyl- und Cycloheptylreste; Arylreste, wie der Phenylrest; Aralkylreste, wie der Benzyl-, $\alpha$ - und $\beta$ -Phenylethylrest; Alkarylreste, wie o-, m-, p-Tolylreste und Xylylreste; substituierte Kohlenwasserstoffreste, wie der ß-Cyanethylrest und der 3,3,3-Trifluorpropylrest sowie Chlorphenylreste.

Beispiele für bevorzugte Reste R' sind insbesondere Methyl-, Ethyl-, n-Propyl- und iso-Propylreste, aber auch als bevorzugte Reste R genannte $C_4$- bis $C_8$-Alkylreste, sowie Nonyl- und Decylreste, sowie der 2-Methoxyethoryrest.

Beispiele für bevorzugte Reste R'' sind der beta-Aminoethylgamma-aminopropylrest, der 3-Mercaptopropylrest, der 3-Aminopropylrest, der 3(N-Cyclohexyl-)aminopropylrest, der 3-Methacryloxvpropylrest, der 3-Acryloxypropylrest, der 3-Morpholinopropylrest, der 3-(N-Methyl-)aminopropylrest und der Glycidorypropylrest.

Der durchschnittliche Wert für a liegt vorzugsweise zwischen 1,9 und 2,1, insbesondere zwischen 1,95 und 2,05.

Die Organopolysiloxane der Formel (I) werden vorzugsweise hergestellt durch Umsetzung von alpha-omega-Dihydroxypolyorganosiloxanen mit Silanen der Formel

$(R'O)_{m+1}$ - $SiR''_{(3-m)}$ (II),

wobei R', R'' und m die oben genannten Bedeutungen besitzen.

Falls jedoch R'' die Bedeutung

H - X - $(CH_2)_p$ - hat,

worin p 2 oder 3 und

X ein Schwefelatom oder einen Rest der Formel $-NR^2$ ist, wobei

$R^2$ ein Wasserstoffatom oder eine Alkyl-, Cycloalkyl-, Aminoalkyl- oder Mercaptoalkylgruppe mit jeweils 1 bis 6 Kohlenstoffatomen bedeutet,

was ganz besonders bevorzugt ist,

so werden die alpha-omega-Dihydroxypolyorganosiloxane insbesondere mit Silanen der Formel

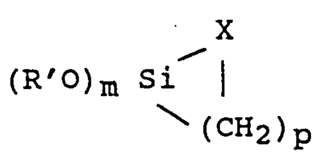

(III)

umgesetzt.

Beispiele für Silane der Formel (II) sind Methacryloxypropyltrimethoxysilan, Glycidoxypropyltriethoxysilan, Mercaptopropyltrimethoxysilan, beta-Aminoethyl-gamma-amino-propyltrimethoxysilan, beta-Aminoethyl-gamma-aminopropyltriethoxysilan und beta-Aminoethyl-gamma-aminopropylmethyldimethoxysilan.

Beispiele für Silane der Formel (III) sind solche der Formeln

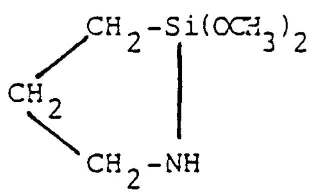

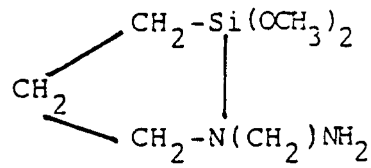

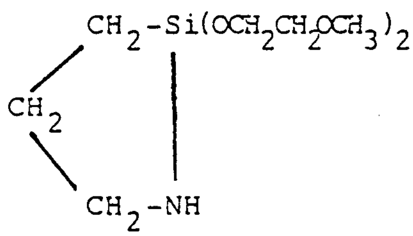

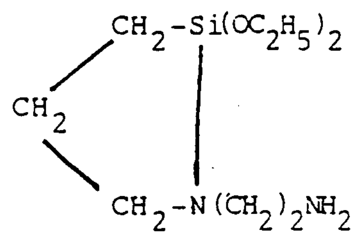

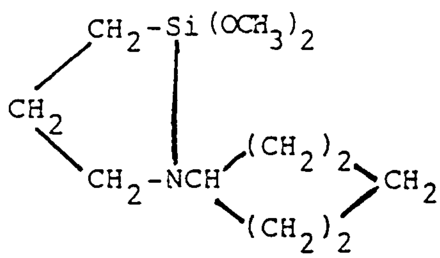

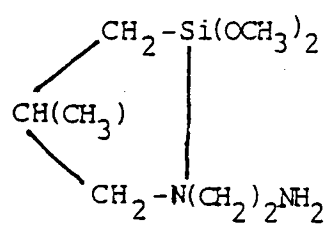

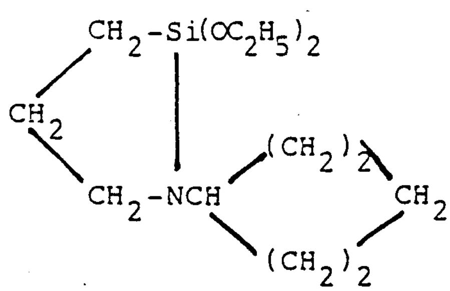

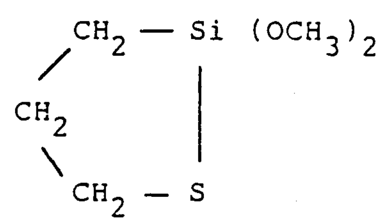

und

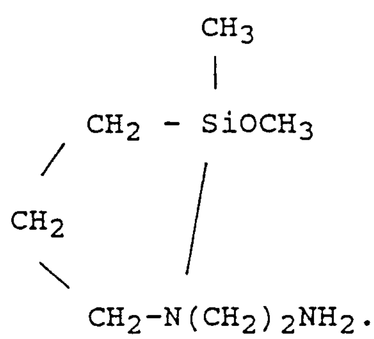

Die Umsetzung von alpha-omega-Dihydroxypolyorganosiloxanen mit Silanen der Formel (II) erfolgt vorzugsweise bei Temperaturen von 20 °C bis 150 °C, insbesondere von 20 °C bis 80 °C, die Umsetzung

mit Silanen der Formel (III) vorzugsweise von 10 ° C bis 60 ° C, insbesondere von 15 ° C bis 30 ° C.

Die Organopolysiloxane der Formel (I) besitzen vorzugsweise eine Viscosität von 50 bis 1 000 000 mPa.s, insbesondere von 20 000 bis 350 000 mPa.s, jeweils gemessen bei 23 ° C.

Um die Reaktion des alpha, omega-Dihydroxypolyorganosiloxans mit Silanen der Formel (II) und (III) möglichst vollständig verlaufen zu lassen, können 5 bis 20 Gewichtsteile der Silane der Formel (II) und/oder (III) pro Gewichtsteil des alpha, omega-Dihydroxypolyorganosiloxans eingesetzt werden. Der während der Reaktion nicht abreagierte Überschuß an Silanen der Formeln (II) und (III) ist in den erfindungsgemäß stabilisierten Organopolysiloxanmassen nicht von Nachteil und kann deshalb im Reaktionsgemisch verbleiben. Desgleichen stört auch der durch die Kondensation von Silan der Formel (II) mit Silanolgruppen freiwerdende Alkohol der Formel R'OH nicht in den erfindungsgemäß stabilisierten Massen. Es ist jedoch bevorzugt, daß maximal 5, vorzugsweise 1 bis 5 Gewichtsteile Silane der Formeln (II) und/oder (III) pro 100 Gewichtsteile des alpha-omega-Dihydroxypolyorganosiloxans eingesetzt werden.

Die Reaktion der beiden Komponenten ist im allgemeinen bei den vorstehend genannten Temperaturen im Laufe von einer Stunde, vorzugsweise 30 Minuten abgeschlossen.

Die erfindungsgemäß stabilisierten Massen enthalten neben Organopolysiloxanen der Formel (I) Salze von Metallen der zweiten Haupt- und Nebengruppe des Periodensystems mit verzweigkettigen Carbonsäuren mit 5 bis 15, vorzugsweise 6 bis 12 Kohlenstoffatomen. Wegen ihrer geringeren Toxizität sind Magnesium-, Calcium- und Zinksalze bevorzugt, insbesondere Calcium und Zinksalze. Insbesondere die Salze der 2-Ethylhexansäure sind bevorzugt. Salze anderer Metalle, wie Cobalt und Eisen, führen zur Verfärbung der Vulkanisate.

Die genannten Carbonsäuresalze haben eine lagerstabilisierende Wirkung auf die Massen, die sich auch noch bei erhöhter Temperatur auswirkt. Erhöhte Temperaturen, beispielsweise 30 bis 50 ° C werden beispielsweise erreicht, wenn die erfindungsgemäß stabilisierten Massen im Sommer im Freien, beispielsweise auf Baustellen gelagert werden. Enthalten derart gelagerte Massen nicht, wie gemäß der vorliegenden Erfindung gefordert, die oben angegebenen Metallsalze verzweigter Carbonsäure, so kann der Fall eintreten, daß die Zusammensetzungen nicht mehr oder nur ungenügend sich bei Raumtemperatur zu Elastomeren aushärten lassen.

Die erfindungsgemäß stabilisierten Organopolysiloxanmassen können ein oder mehrere Organopolysiloxan(e) der Formel (I), sie können ein oder mehrere Metallsalz(e) verzweigtkettiger Carbonsäuren der oben genannten Art enthalten.

Die erfindungsgemäß stabilisierten Organopolysiloxanmassen enthalten 1 bis 5 %, insbesondere 2 bis 4 % an Metallsalzen der oben genannten Art, jeweils bezogen auf das Gesamtgewicht der Organopolysiloxanmasse (inklusive gegebenenfalls verwendeter Zusatzstoffe).

Die oben genannten Metallsalze können den Organopolysiloxanen der Formel (I) nicht nur nach deren Herstellung, sondern auch schon vor und während deren Herstellung, beispielsweise aus alpha-, omega-Dihydroxypolyorganosiloxanen und Silanen der Formel (II) und /oder (III) hinzugefügt werden.

Die Herstellung der erfindungsgemäß stabilisierten Organopolysiloxanmassen und deren Lagerung muß unter im wesentlichen wasserfreien Bedingungen erfolgen, da ansonsten die Massen vorzeitig aushärten können.

Zusätzlich zu den vorgenannten Komponenten können die erfindungsgemäß stabilisierten Organopolysiloxanmassen weitere, an sich bekannte Komponenten enthalten.

Weitere Stoffe, die vorzugsweise bei der Bereitung der Massen mitverwendet werden können, sind Silane der Formel

$$R_r\,Si(OR')_{4-r} \qquad (IV),$$

worin R und R' jeweils die oben dafür angegebene Bedeutung haben und r 0 oder 1 ist, oder deren Teilhydrolysate, wie Hexamethoxydisiloxan. Desgleichen können verwendet werden Kondensationskatalysatoren, verstärkende Füllstoffe, nichtverstärkende Füllstoffe, Pigmente, lösliche Farbstoffe, Riechstoffe, Weichmacher, wie bei Raumtemperatur flüssige, durch Trimethylsiloxygruppen endblockierte Dimethylpolysiloxane oder Phosphorsäureester, Fungicide, harzartige Organopolysiloxane, einschließlich solcher aus $(CH_3)_3\,SiO_{1/2}$- und $SiO_{4/2}$-Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole,die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z. B. Azodicarbonamid.

Desgleichen können Haftvermittler, vorzugsweise aminofunktionelle Silane zugegeben werden.

Kondensationskatalysatoren werden vorzugsweise eingesetzt. Es können die erfindungsgemäß stabilisierten Massen beliebige Kondensationskatalysatoren enthalten, die auch bisher in unter Ausschluß von Wasser lagerfähigen, bei Zutritt von Wasser bei Raumtemperatur zu Elastomeren vernetzenden Massen hergestellt worden sind, vorliegen konnten. Dazu gehören alle in der eingangs genannten US 4 424 157 erwähnten Kondensationskatalysatoren. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

≡SiOSn≡

bzw. durch SnC-gebundene, einwertige organische Reste abgesättigt sind. Die Herstellung derartiger Umsetzungsprodukte ist in US 4 460 761 (ausgegeben 17. Juli 1984, A. Schiller et al., Wacker-Chemie GmbH) eingehend beschrieben. Vorzugsweise enthalten die erfindungsgemäß stabilisierten Massen Füllstoffe. Beispiele für Füllstoffe sind nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Verätherung von Hydroxylgruppen zu Alkoxygruppen. Es kann eine Art von Füllstoff, es kann auch ein Gemisch von mindestens zwei Füllstoffen eingesetzt werden.

Zur Bereitung der erfindungsgemäß stabilisierten Massen können alle Bestandteile der jeweiligen Masse in beliebiger Reihenfolge miteinander vermischt werden. Dieses Vermischen erfolgt vorzugsweise bei Raumtemperatur. Falls erwünscht, kann dieses Vermischen aber auch bei höheren Temperaturen erfolgen, z. B. bei Temperaturen im Bereich von 35° C bis 135° C. Vorzugsweise wird bei diesem Vermischen der Zutritt von Wasser soweit wie möglich ausgeschlossen.

Für die Vernetzung der erfindungsgemäß stabilisierten Massen reicht der übliche Wassergehalt der Luft aus. Die Vernetzung kann, falls erwünscht, auch bei höheren oder niedrigeren Temperaturen als Raumtemperatur, z. B. bei -5° bis 10° C oder bei 30° bis 50° C durchgeführt werden.

Die erfindungsgemäß stabilisierten Massen können für alle Verwendungszwecke eingesetzt werden, für die unter Ausschluß von Wasser lagerfähige, bei Zutritt von Wasser bei Raumtemperatur zu Elastomeren vernetzende Massen eingesetzt werden können.

Die erfindungsgemäß stabilisierten Massen eignen sich somit ausgezeichnet beispielsweise als Abdichtungsmassen für Fugen, einschließlich senkrecht verlaufender Fugen, und ähnlichen Leerräumen von z. B. 10 bis 40 mm lichter Weite, z. B. von Gebäuden, Land-, Wasser- und Luftfahrzeugen, oder als Klebstoffe oder Verkittungsmassen, z. B. im Fensterbau oder bei der Herstellung von Aquarien oder Vitrinen, sowie z. B. zur Herstellung von Schutzüberzügen, einschließlich solcher für der ständigen Einwirkung von Süß- oder Meerwasser ausgesetzten Oberflächen, oder das Gleiten verhindernden Überzügen, oder von gummielastischen Formkörpern sowie für die Isolierung von elektrischen oder elektronischen Vorrichtungen.

Im Rahmen der erfindungsgemäßen Verwendung zur Stabilisierung von unter Abspaltung von Alkoholen vernetzbaren Organopolysiloxanmassen können die genannten Salze der 2. Haupt- und Nebengruppe des Periodensystems mit verzweigtkettigen Carbonsäuren (kurz Metallsalze genannt) in jedem Verfahrensschritt der Masse zugefügt werden. Bevorzugt als zu stabilisierende Masse sind Organopolysiloxane der Formel (I), welche gegebenenfalls die oben genannten Zusatzstoffe enthalten.

Im Rahmen der erfindungsgemäßen Verwendung werden die Metallsalze in Mengen von 1 bis 5 %, bezogen auf das Gesamtgewicht der Organopolysiloxane (inklusive gegebenenfalls verwendeter Zusatzstoffe) eingesetzt.

In den folgenden Beispielen beziehen sich alle Angaben von Teilen und Prozentsätzen auf das Gewicht, soweit nicht anders angegeben ist.

In den folgenden Beispielen werden Shore-A-Härte nach DIN (Deutsche Industrie Norm) 53505, Reißfestigkeit nach DIN 53504 mit Normstab S 3A und Reißdehnung ebenfalls nach DIN 53504 mit Normstab S 3A bestimmt.

Beispiele:

A: Herstellung von Organopolysiloxanen der Formel (I):

1) In einem 1 l-Glasgefäß, das mit Rührer und Rückflußkühler ausgestattet war, wurden unter Wasserausschluß 500 Gewichtsteile eines in den endständigen Einheiten je eine Hydroxylgruppe aufweisenden Polydimethylsiloxans einer Viskosität von 80 000 mPa.s bei 23° C mit 15 Gewichtsteilen 3-Cyclohexylaminopropyltrimethoxysilan (käuflich bei Wacker-Chemie GmbH, D-8000 München) bei einer Temperatur von ca. 23° C vermischt und 30 min lang gerührt. Das Reaktionsprodukt enthält gemäß dem $^{29}$ Si-NMR-Spektrum keine bedeutenden Mengen an Silanolgruppen mehr.

2) Die Herstellung gemäß A 1) wurde wiederholt, mit der Abänderung, daß statt 15 Gewichtsteilen 3-Cyclohexylaminopropyltrimethoxysilan 25 Gewichtsteile 3-Methacryloxypropyltrimethoxysilan eingesetzt wurden und das so erhaltene Gemisch bei 80° C statt 23° C 30 min lang gerührt wurde. Im Reaktionsgemisch verbliebener Alkohol wurde nicht entfernt, da er die Lagerfähigkeit der erfindungsgemäßen Organopolysiloxanmassen nicht beeinflußte.

3) Die Herstellung gemäß A 1) wurde wiederholt mit der Abänderung, daß statt 15 Gewichtsteilen 3-Cyclohexyl-aminopropyltrimethoxysilan15 Gewichtsteile 1,1-Diethoxy-1-sila-2-cyclohexyl-2-aza-cyclopentan (erhältlich durch intramolekulare Cyclisierung von 3-Cyclohexylaminopropyltriethoxysilan durch Erhitzen) eingesetzt wurden. Die Reaktion verlief deutlich schneller als in Beispiel A 1).

B Herstellung der erfindungsgemäß verwendeten Organopolysiloxanmassen und Vergleichsbeispiele

Beispiel 1

Zu 100 g des Polymeren, dessen Herstellung unter A 1) beschrieben ist, wurden unter Ausschluß von Wasser 60 g als endständige Einheiten Trimethylsiloxygruppen enthaltendes Polydimethylsiloxan einer Viscosität von 100 $mm^2/s$ bei 23°C, 2 g Zink-2-ethylhexoat (erhältlich von der Firma Acima, CH-9470 Buchs) und 1,6 g beta-Aminoethyl-gamma-aminopropyltrimethoxysilan (erhältlich bei der Wacker-Chemie GmbH, D-8000 München) und 20 g pyrogene Kieselsäure (erhältlich als HDK-V 15 von der Fa. Wacker-Chemie GmbH, D-8000 München), 12 g Tetraethylsilicat und 0,2 g Di-n-butoxy-bis(triethoxysiloxy)stannan (herstellbar gemäß EP-B 9 0409) gegeben, die Mischung homogenisiert und in feuchtigkeitsdichte Behälter abgefüllt. Nach verschiedenen Zeiträumen wurden Propen entnommen und die physikalischen Eigenschaften der daraus hergestellten Elastomere bestimmt. Die dabei erzielten Ergebnisse sind in Tabelle 1 aufgeführt.

Tabelle 1:

| Lagerzeit Tage | Shore A DIN 53505 | Reißfestigkeit DIN 53504-S3A N/mm² | Reißdehnung DIN 53504-S3A % | Weiterreißwiderstand ASTM D 624 Form B N/mm | Spannungswert bei 100 % Dehnung DIN 53504-S3A N/mm² |
|---|---|---|---|---|---|
| 7 | 17 | 1,6 | 510 | 4,0 | 0,32 |
| 28 | 16 | 1,7 | 450 | 4,0 | 0,33 |
| 56 | 18 | 1,8 | 520 | 3,9 | 0,36 |
| 112 | 20 | 1,8 | 435 | 4,1 | 0,38 |
| 168 | 21 | 1,8 | 480 | 4,1 | 0,40 |

Vergleichsbeispiel 1:

Beispiel 1 wurde ohne Zugabe von Zink-2-ethylhexoat wiederholt. Die entsprechenden physikalischen Daten sind in Tabelle 2 aufgeführt.

Tabelle 2:

| Lagerzeit Tage | Shore A DIN 53505 | Reißfestigkeit DIN 53504-S3A | Reißdehnung DIN 53504-S3A | Weiterreißdehnung ASTM D 624 Form B | Spannungswert bei 100 % Dehnung DIN 53504-S3A |
|---|---|---|---|---|---|
| | | $N/mm^2$ | % | N/mm | $N/mm^2$ |
| 7 | 17 | 1,5 | 520 | 4,2 | 0,31 |
| 28 | 17 | 1,6 | 610 | 3,8 | 0,22 |
| 56 | 12 | 0,8 | 885 | 1,5 | 0,13 |
| 112 | 8 | 0,2 | 940 | 0,8 | 0,06 |
| 168 | 5 | / | / | / | / |

Beispiel 2:

Zu 100 g des Polymeren, dessen Herstellung unter A 1) beschrieben ist, wurden unter Ausschluß von Wasser 32 g eines als endständige Einheiten Trimethylsiloxygruppen aufweisendem Polydimethylsiloxans einer Viscosität von 100 $mm^2/s$ bei 25° C, 5,0 g Calcium-2-ethylhexoat (erhältlich von der Fa. Acima, CH-9470 Buchs), 3 g 3-Aminopropyltriethoxysilan, 130 g beschichtete Kreide (erhältlich von ICI als "Winnofil SP"), 10 g Methyltrimethoxysilan und 1 g Tetra-iso-propyltitanat gegeben und die Mischung homogenisiert. Die Weiterbehandlung erfolgte analog zu Beispiel 1. Die entsprechenden physikalischen Daten sind in Tabelle 3 wiedergegeben.

Tabelle 3:

| Lagerzeit Tage | Shore A DIN 53505 | Reißfestigkeit DIN 53504-S3A | Reißdehnung DIN 53504-S3A | Spannungswert bei 100 % Dehnung DIN 53504-S3A | Weiterreißwiderstand ASTM D 624 Form B |
|---|---|---|---|---|---|
| | | $N/mm^2$ | % | $N/mm^2$ | N/mm |
| 7 | 31 | 1,47 | 370 | 0,68 | 7,7 |
| 28 | 32 | 1,51 | 340 | 0,78 | 7,5 |
| 56 | 32 | 1,55 | 360 | 0,74 | 7,5 |
| 112 | 33 | 1,48 | 310 | 0,60 | 6,3 |
| 168 | 32 | 1,57 | 320 | 0,70 | 6,8 |

Vergleichsbeispiel 2:

Beispiel 2 wurde ohne Zugabe von Calcium-2-ethylhexoat wiederholt. Die entsprechenden physikalischen Daten sind in Tabelle 4 wiedergegeben.

Tabelle 4:

| Lagerzeit Tage | Shore A DIN 53505 | Reißfestigkeit DIN 53504-S3A | Reißdehnung DIN 53504-S3A | Spannungswert bei 100 % Dehnung DIN 53504-S3A | Weiterreißwiderstand ASTM D 624 Form B |
|---|---|---|---|---|---|
| | | $N/mm^2$ | % | $N/mm^2$ | N/mm |
| 7 | 30 | 1,51 | 380 | 0,71 | 7,5 |
| 28 | 27 | 1,38 | 420 | 0,65 | 6,4 |
| 56 | 23 | 1,17 | 580 | 0,52 | 4,9 |
| 112 | 12 | 0,83 | 670 | 0,32 | 2,8 |
| 168 | 5 | / | 980 | / | / |

Beispiel 3:

Zu 100 g des Polymeren, dessen Herstellung unter A 3) beschrieben ist, wurden unter Ausschluß von Wasser 50 g eines in den endständigen Einheiten Trimethylsiloxygruppen aufweisenden Polydimethylsiloxans einer Viscosität von 100 $mm^2/s$ bei 25° C, 6 g Zink-2-ethylhexoat, 50 g Aluminiumsilicat, 15 g Tetraethylsilicat und 0,8 g Tetra-iso-propyltitanat zugegeben und die so erhaltene Mischung homogenisiert. Die physikalischen Daten analog Beispiel 1 sind in Tabelle 5 aufgeführt.

Tabelle 5:

| Lagerzeit Tage | Shore A DIN 53505 | Reißfestigkeit DIN 53504-S3A | Reißdehnung DIN 53504-S3A | Spannungswert bei 100 % Dehnung DIN 53504-S3A | Weiterreißwiderstand ASTM D 624 Form B |
|---|---|---|---|---|---|
| | | $N/mm^2$ | % | $N/mm^2$ | N/mm |
| 7 | 28 | 2,5 | 360 | 0,45 | 6,5 |
| 28 | 29 | 2,3 | 380 | 0,42 | 6,4 |
| 56 | 31 | 2,6 | 345 | 0,46 | 6,7 |
| 112 | 30 | 2,5 | 330 | 0,44 | 6,6 |
| 168 | 31 | 2,8 | 330 | 0,39 | 6,6 |

Vergleichsbeispiel 3:

Beispiel 3 wurde ohne Zugabe von Zink-2-ethylhexoat wiederholt. Die physikalischen Daten sind in Tabelle 6 aufgeführt.

Tabelle 6:

| Lagerzeit Tage | Shore A DIN 53505 | Reißfestigkeit DIN 53504-S3A N/mm² | Reißdehnung DIN 53504-S3A % | Spannungswert bei 100 % Dehnung DIN 53504-S3A N/mm² | Weiterreißwiderstand ASTM D 624 Form B N/mm |
|---|---|---|---|---|---|
| 7 | 29 | 2,3 | 420 | 0,48 | 6,7 |
| 28 | 16 | 1,7 | 690 | 0,23 | 4,8 |
| 56 | 8 | 0,5 | 835 | 0,05 | 1,6 |
| 112 | / | / | / | / | / |
| 168 | / | / | / | / | / |

Vergleichsbeispiel 4:

Beispiel 1 wurde wiederholt mit der Abänderung, daß statt 2 g Zink-2-ethylhexoat 4 g Zink-n-octoat eingesetzt wurden. Die entsprechenden physikalischen Daten sind in der nachfolgenden Tabelle 7 aufgeführt.

Tabelle 7

| Lagerzeit Tage | Shore A DIN 53505 | Reißfestigkeit DIN 53504-S3A $N/mm^2$ | Reißdehnung DIN 53504-S3A % | Spannungswert b.100 % Dehng. DIN 53504-S3A $N/mm^2$ | Weiterreißfestigkeit ASTM D 624 Form B N/mm |
|---|---|---|---|---|---|
| 7 | 17 | 1,6 | 550 | 0,32 | 4,2 |
| 28 | 18 | 1,6 | 580 | 0,26 | 3,9 |
| 56 | 15 | 1,4 | 820 | 0,17 | 1,6 |
| 112 | 7 | 0,4 | 880 | - | 0,7 |
| 168 | 5 | - | - | - | - |

## Patentansprüche

1. Verwendung von Salzen von Metallen der 2. Haupt- und Nebengruppe des Periodensystems mit verzweigtkettigen Carbonsäuren mit 5 bis 15 Kohlenstoffatomen zum Stabilisieren von unter Abspaltung von Alkoholen vernetzbaren Organopolysiloxanmassen, wobei die Salze in Mengen von 1 bis 5 %, bezogen auf das Gesamtgewicht der Organopolysiloxanmasse, zugesetzt werden.

2. Verwendung nach Anspruch 1, wobei die Organopolysiloxanmassen Organopolysiloxane der Formel

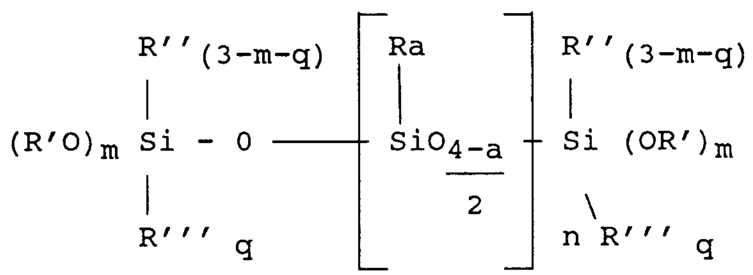

(I)

enthalten, worin

- R gleiche oder verschiedene einwertige, gegebenenfalls substituierte Kohlenwasserstoffreste mit 1 bis 13 Kohlenstoffatomen;
- R' gleiche oder verschiedene einwertige Kohlenwasserstoff reste mit 1 bis 10 Kohlenstoffatomen, die durch $C_1$- bis $C_3$-Alkoxygruppen substituiert sein können;
- R'' gleiche oder verschiedene Si-C-gebundene substituierte Alkylreste mit 1 bis 18 Kohlenstoffatomen, deren Substituenten Amino-, Mercapto-, Acryloxy-, Methacryloxy-, Epoxy-, Allyl- und Cyclohexenylgruppen, Halogenatome und Cyanogruppen sein können;
- R''' gleiche oder verschiedene $C_1$- bis $C_3$-Alkylreste;
- n eine ganze Zahl im Wert von mindestens 50;
- m 1 oder 2;
- q 0 oder 1 beträgt, mit der Maßgabe, daß 3-m-q einen Wert von jeweils mindestens 1 besitzt, und
- a jeweils ganze Zahlen im Wert von 0, 1, 2 oder 3 und einem durchschnittlichen Wert von 1,8 bis 2,2 bedeuten.

3. Verwendung nach Anspruch 1 oder 2, wobei die Salze Magnesium-, Calcium- und/oder Zinksalze von verzweigtkettigen Carbonsäuren mit 5 bis 15 Kohlenstoffatomen sind.

## Claims

1. Use of salts of metals of main and sub-groups 2 of the Periodic Table with branched-chain carboxylic acids having 5 to 15 carbon atoms for the stabilisation of organopolysiloxane compositions which can be cross-linked with elimination of alcohols, the salts being added in amounts of from 1 to 5 %, based on the total weight of the organopolysiloxane composition.

2. Use according to Claim 1, in which the organopolysiloxane compositions contain the organopolysiloxanes of the formula

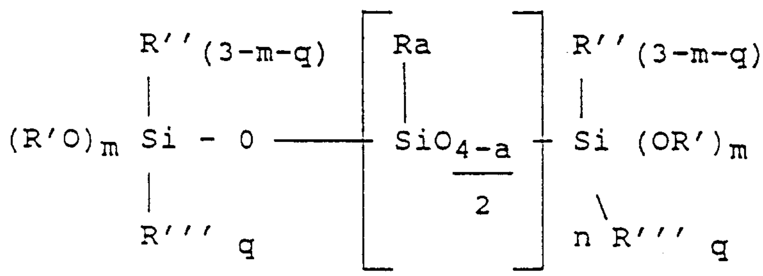

(I),

in which
the R radicals are identical or different monovalent, optionally substituted hydrocarbon radicals having 1 to 13 carbon atoms;
the R' radicals are identical or different monovalent hydrocarbon radicals which have 1 to 10 carbon atoms and may be substituted by a $C_1$-to $C_3$- alkoxy group;
the R'' radicals are identical or different Si-C-bound substituted alkyl radicals which have 1 to 18 carbon atoms and whose substituents may be amino, mercapto, acryloxy, methacryloxy, epoxy, allyl and cyclohexenyl groups, halogen atoms and cyano groups;
the R''' radicals are identical or different $C_1$-to $C_3$- alkyl radicals;
n is an integer having a value of at least 50;
m is 1 or 2;
q is 0 or 1, with the proviso that 3-m-q is at least 1 and
a is in each case an integer having a value of 0, 1, 2 or 3 and an average value of 1.8 to 2.2.

3. Use according to Claim 1 or 2, the salts being magnesium, calcium and/or zinc salts of a branched-chain carboxylic acid having 5 to 15 carbon atoms.

## Revendications

1. Utilisation de sels de métaux du deuxième groupe principal et du deuxième groupe secondaire du Tableau Périodique avec des acides carboxyliques à chaîne ramifiée ayant de 5 à 15 atomes de carbone, pour stabiliser des compositions de polyorganosiloxane réticulables avec élimination d'alcools, les sels étant ajoutés en des quantités de 1 à 5 % par rapport au poids total de la composition de polyorganosiloxane.

2. Utilisation selon la revendication 1, dans laquelle les compositions de polyorganosiloxane contiennent des polyorganosiloxanes de formule

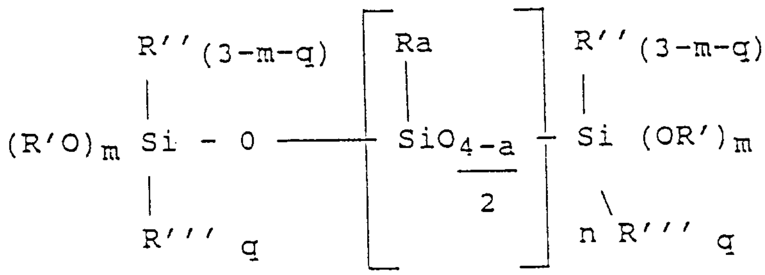

(I)

dans laquelle

R représente des résidus hydrocarbonés monovalents, éventuellement substitués, identiques ou différents, ayant chacun de 1 à 13 atomes de carbone ;

R' représente des résidus hydrocarbonés monovalents identiques ou différents, ayant de 1 à 10 atomes de carbone, et pouvant être substitués par un groupe alcoxy en $C_1$ à $C_3$ ;

R'' représente des résidus alkyle identiques ou différents, substitués, liés par liaison Si-C et ayant de 1 à 18 atomes de carbone, dont les substituants peuvent être les groupes amino, mercapto, acryloxy, méthacryloxy, époxy, allyle ou cyclohexényle, ou encore des atomes d'halogène ou des groupes cyano ;

R''' représente des résidus alkyle en $C_1$ à $C_3$ identiques ou différents ;

n est un nombre entier valant au moins 50 ;

m vaut 1 ou 2 ; q vaut 0 ou 1, du moment que 3-m-q vaut au moins 1 ;

les indices a représentent chacun un nombre entier égal à 0, 1, 2 ou 3, avec en moyenne 1,8 à 2,2.

3. Utilisation selon la revendication 1 ou 2, dans laquelle les sels sont des sels de magnésium, de calcium et/ou de zinc d'acides carboxyliques à chaîne ramifiée ayant de 5 à 15 atomes de carbone.